Europäisches Patentamt

European Patent Office

Office européen des brevets

(11) Publication number: **0 280 331**
**A2**

## EUROPEAN PATENT APPLICATION

(21) Application number: **88102930.0**

(22) Date of filing: **26.02.88**

(51) Int. Cl.⁴: **C01B 17/04**

(30) Priority: **27.02.87 US 20040**

(43) Date of publication of application:
**31.08.88 Bulletin 88/35**

(84) Designated Contracting States:
**BE DE ES FR GB IT**

(71) Applicant: **UNION CARBIDE CORPORATION**
**39 Old Ridgebury Road**
**Danbury Connecticut 06817(US)**

(72) Inventor: **Szekely, Andrew Geza**
**2379 Clair Court**
**Yorktown Heights N.Y. 10598(US)**

(74) Representative: **Schwan, Gerhard, Dipl.-Ing.**
**Elfenstrasse 32**
**D-8000 München 83(DE)**

(54) **Process for recovering sulfur from acid gas.**

(57) An improved Claus process wherein water is provided to the combustion zone to moderate the temperature of oxygen-enriched combustion thus permitting a substantial increase in the productivity of Claus plants by oxygen enrichment.

EP 0 280 331 A2

# PROCESS FOR RECOVERING SULFUR FROM ACID GAS

## Technical field

This invention relates generally to the field of Claus sulfur recovery and is particularly advantageous in a process wherein the acid gas is combusted with oxygen or oxygen-enriched air.

## Background Art

The Claus process is widely used to produce sulfur from acid gas and other gases containing hydrogen sulfide. In the Claus process acid gas containing hydrogen sulfide is combusted with air to form sulfur dioxide. The combustion products are cooled and uncombusted hydrogen sulfide reacts with the sulfur dioxide to form sulfur and water. The reaction stream is cooled and the sulfur is condensed and recovered. The reaction stream is then passed through one or more catalytic reactors wherein additional sulfur is produced by the reaction of previously unreacted hydrogen sulfide and sulfur dioxide.

The amount of oxygen provided to the process is such as to be sufficient to combust about one-third of the incoming hydrogen sulfide as well as all of the other combustibles in the acid gas. Since air contains only about 21 percent oxygen, a significant amount of inert nitrogen is passed through the system. Furthermore, if the hydrogen sulfide concentration in the acid gas were to increase, a greater amount of oxygen would be needed thus requiring an even greater amount of inert nitrogen to pass through the system. The increased flow of nitrogen increases the pressure drops in the system, reduces the residence time of the reactants in the reactors and increases the gas volume to be treated in the rail gas treating unit. Nitrogen is an undesirable diluent in the Claus process which, however, cannot be avoided if the acid gas is combusted with air.

Those skilled in the art have addressed the problem of this unproductive nitrogen throughput by employing oxygen or oxygen-enriched air as the oxidant and this technique can reduce the amount of useless nitrogen which passes though the system.

However, where the incoming acid gas contains a large concentration i.e. greater than about 50 percent hydrogen sulfide and other combustibles, the temperature of the combustion reaction when oxygen or oxygen-enriched air is the oxidant can exceed the temperature tolerance of the refractories in the combustion zone.

Those skilled in the art have addressed the problem of high combustion zone temperatures by recycling a portion of the downstream flow back to the combustion zone to dilute the combustion zone reactants and consequently reduce the combustion temperature. For example, U.S. Patent No. 3,681,024-Hujsak teaches recycling a portion of the gas effluent from the last sulfur condenser to the combustion zone and U.S. Patent No.4,552,747 - Goar teaches recycling a portion of the gas effluent from the first sulfur condenser to the combustion zone.

However a problem with recirculation processes is that because nearly as much recirculated gas is required on a heat capacity basis as nitrogen was replaced by oxygen enrichment, any significant increase in the production rate can be achieved only by an increase in the total gas input rate to the combustion zone. However, such an increase in the gas input rate increases the pressure drop in and downstream of the combustion zone up to the point where a fraction of the main gas stream is to be diverted for recirculation. Furthermore, the equipment associated with the metering, regulation and repressurization of the recirculated gas is vulnerable to breakdowns and may jeopardize the continuous operation of the plant.

Thus it would be desirable to have a Claus process wherein oxygen or oxygen-enriched air can be employed as the oxidant and wherein gas recirculation is not needed to maintain non-excessive temperature in the combustion zone.

It is therefore an object of this invention to provide an improved process for the recovery of sulfur by the combustion of acid gas with oxygen or oxygen-enriched air without the need for gas recirculation to the combustion zone.

## Summary of the Invention

The above and other objects which will become apparent to one skilled in the art upon a reading of this disclosure are attained by this invention which is:

A process for recovering sulfur comprising:

(A) providing acid gas containing hydrogen sulfide, oxidant, and water to a combustion zone to form a reaction stream;

(B) combusting hydrogen sulfide with oxidant in the presence of water to provide sulfur dioxide to the reaction stream;

(C) reacting sulfur dioxide with hydrogen sulfide to produce sulfur;

(D) recovering sulfur from the reaction stream;

(E) removing water from the reaction stream by condensation; and

(F) passing the partially dehumidified reaction stream to at least one catalytic reaction zone for the further production of sulfur.

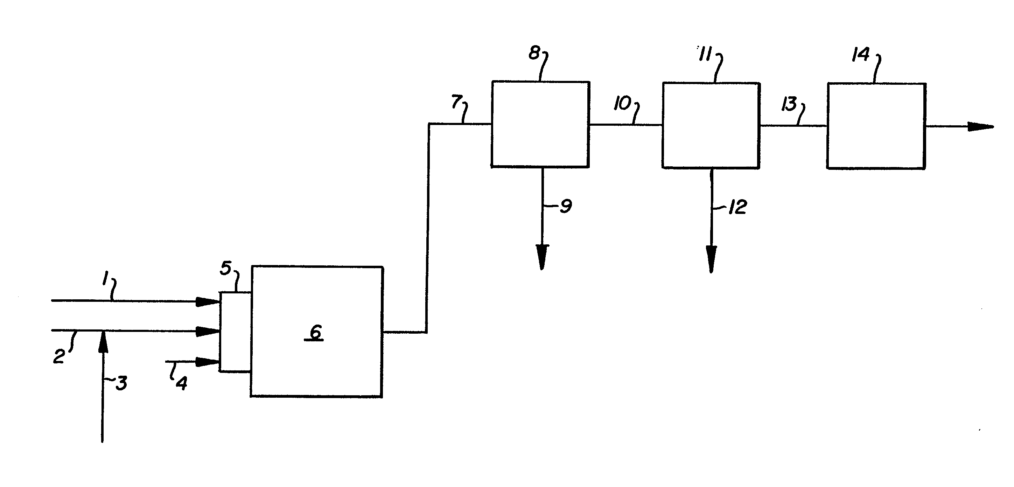

## Brief Description of the Drawing

The sole Figure is a simplified schematic flow diagram of one embodiment of the process of this invention.

## Detailed Description

The process of this invention will be described in detail with reference to the Figure.

Referring now to the Figure, acid gas 1 containing hydrogen sulfide is passed to combustion zone 5. The advantages of the process of this invention are most noticeable when the hydrogen sulfide concentration in the acid gas exceeds 50 mole percent. The acid gas usually contains a number of other constituents including carbon dioxide, hydrogen, ammonia and various hydrocarbons.

Oxidant is added to the acid gas in combustion zone 5. The oxidant may be air, oxygen-enriched air or pure oxygen. The advantages of the process of this invention are most noticeable when the oxygen concentration of the oxidant exceeds that of air. When oxygen-enriched air is employed as the oxidant, oxygen can be premixed with air before introducing the oxidant to the combustion zone, or pure oxygen and air can both be directly introduced into the combustion zone. Preferably the oxygen concentration of the oxidant is within the range of from 23 to 100 percent. In the embodiment illustrated in the Figure, air 2 is mixed with pure oxygen 3 to form oxygen-enriched air 15 which is passed to combustion zone 5 as the oxidant.

The process of this invention comprises the addition of water 4 to the combustion zone along with the acid gas and oxidant. Preferably the water is introduced into the combustion zone at ambient temperature in a proportion of from about 0.40 to 0.45 mole of water per mole of nitrogen eliminated by the increase in the oxygen concentration of the oxidant over the highest oxygen concentration which cannot be exceeded without endangering the refractories by excessive temperatures. For a given acid gas composition, the nitrogen moles eliminated by this change in the oxygen concentration can be calculated from the following equation:

$$N = 100A(1/O_1 - 1/O_2) \text{ mole } N_2/\text{mole acid gas}$$

where A is the total oxygen moles required for the partial combustion of the acid gas in moles/mole acid gas, $O_1$ is the highest oxygen concentration permitted in the oxidant without water addition in mole percent, and $O_2$ is the oxygen concentration with water addition in mole percent. Thus the amount of water required for temperature moderation is in the range of 0.40N to 0.45N moles of water per mole of acid gas supplied to the combustion zone.

The acid gas, oxidant and water combine to form a reaction stream in combustion zone 5. In the combustion zone, which comprises a burner and refractory material, some of the hydrogen sulfide, generally and preferably about a third, is combusted in the presence of the water to form sulfur dioxide. The water serves to maintain the combustion zone temperature below about 1500°C and generally below about the design temperature of the refractory material. Due to the higher heat capacity and lower temperature of water as opposed to recirculated gas, only about one-half as much water as recirculated gas is needed to maintain an equivalent degree of combustion zone temperature moderation.

The reaction stream is passed from combustion zone 5 to thermal reactor 6 where sulfur dioxide reacts with uncombusted hydrogen sulfide to produce sulfur. Water is a byproduct of this reaction. In the heat exchanger section of thermal reactor 6, the sulfur remains in a gaseous and generally polymerized state as the temperature in the last pass of the heat exchanger is generally maintained above the sulfur dew point.

The reaction stream 7 emerging from thermal reactor 6 comprising mainly of hydrogen sulfide, sulfur dioxide, sulfur, water, and carbon dioxide is passed to sulfur condenser 8 wherein the reaction stream is cooled to a temperature below the sulfur dew point so as to condense out the sulfur. Liquid sulfur 9 is removed from sulfur condenser 8 and recovered. Those skilled in the art of Claus plant operation are well aware of the operation of sulfur condensers and no further discussion is necessary here. The sulfur yield in the sulfur condenser 8 is higher than is possible with conventional air practice due the the decrease in nitrogen dilution indirectly made possible by the addition of water to the combustion zone.

The gas effluent 10 from sulfur condenser 8 is passed to water condenser 11. Preferably water condenser 11 is a well stirred, indirectly cooled tank containing liquid water. However, the water condenser may be any operable condenser such as one which operates by indirect cooling wherein the heat sink is physically separated from the reaction stream. The gas 10 is dispersed in the water bath as finely divided bubbles to provide a good physical contact between the phases. In this way water is condensed out of the reaction stream and into the water bath. Water is removed from condenser 11 through water tap 12 in an amount substantially equivalent to the amount of water removed from the reaction stream. The amount of water removed from the reaction stream preferably at least equals and most preferably exceeds the amount of water provided to combustion zone 5 although the process of this invention is practiceable even if less than the amount of water provided to combustion zone 5 is removed from the reaction stream. However, the reaction stream is not totally dehumidified as this is neither practical nor desirable. If desired, some of all of this water may be used as feed water to the burner in the combustion zone.

By removing water upstream of the catalytic reaction zone(s) but downstream of thermal reactor 6, some of the water produced by the Claus reaction as well as water introduced into the combustion zone is removed prior to the passage of the reaction stream to the catalytic stages. This markedly reduces the downstream pressure drops, increases the sulfur yield by providing longer contact times in the catalytic reactors and results in small gas volumes to be handled in the tail gas treating unit.

The partially dehumidified reaction stream 13 is then conducted through a gas reheater (not shown) to raise the temperature of the reaction stream and then to at least one catalytic reactor 14 wherein hydrogen sulfide and sulfur dioxide react to form sulfur and water with the consequent recovery of further amount of sulfur. Those skilled in the art of Claus plant operation are familiar with this catalytic reaction and consequent sulfur recovery and thus no further discussion is necessary here.

The process of this invention enables one to operate a Claus plant with increased efficiency and greater capacity. The addition of water to the feed enables a higher degree of oxygen enrichment of the air than is otherwise possible which in turn can either significantly increase the production rate, i.e., throughput of the acid gas, or enable the same production rate as is possible with other temperature modification methods but with a lower pressure drop across the thermal reactor. Furthermore, the elimination of some of the process water in the water condenser promotes the conversion of hydrogen sulfide to sulfur in the catalytic reactors, thus further increasing the efficiency of the process.

The following examples serve to further illustrate the process of the invention. The examples are presented for illustrative purposes and are not intended to be limiting.

## EXAMPLE I

Acid gas at a temperature of $49°C$ and containing 85.2 mole percent hydrogen sulfide is fed to a burner in a combustion zone. In addition, air, pure oxygen and water, all at ambient temerature, are fed to the burner in amounts such that the feed to the burner comprises 40.8 mole percent acid gas, 17.9 mole percent air, 17.5 mole percent pure oxygen and 23.8 mole percent water. The oxygen concentration in the oxygen-enriched air oxidant is 60 percent.

The combustion zone employs a high alumina type refractory which can tolerate temperatures up to about $1387°C$. Without combustion zone temperature moderation this would allow use of an oxidant having no more than 23.3 percent oxygen. Since the specific oxygen requirement of this particular acid gas is 0.521 mole of oxygen per mole of acid gas, increasing the oxygen concentration from 23.3 to 60 percent in the oxidant eliminates 1.37 moles of nitrogen per mole of acid gas. The proportion of 23.8 moles of water per 40.8 moles of acid gas fed to the burner corresponds, therefore, to a ratio of $(23.8/40.8)/1.37 = 0.43$ mole of water per mole of nitrogen eliminated by the oxygen enrichment of the oxidant.

The feed to the combustion zone undergoes combustion such that about one-third of the hydrogen sulfide is oxidized to sulfur dioxide. The heat generated by the combustion raises the temperature in the combustion zone to $1386°C$. The hot reaction mixture, including steam which is produced from the water, is cooled to about $230°C$ and thereby hydrogen sulfide and sulfur dioxide reacted to form sulfur and water by the well known Claus reaction.

The gas is then passed to a sulfur condenser where sulfur is condensed and recovered and the resulting gas then passed to a water condenser wherein water is condensed out. At the prevailing pressure of 1.56 atmospheres, the dew point of the gas leaving the water condenser is reduced to $101°C$ whereby the amount of water removal from the gas is essentially equivalent to the water provided to the combustion zone.

The gas leaving the water condenser is reheated and passed through a catalytic reactor where more sulfur is produced by the reaction of residual hydrogen sulfide and sulfur dioxide. The effluent is passed to a second sulfur condenser where sulfur is condensed at $171°C$ and recovered. The overall sulfur recovery is 98.4 percent of the sulfur originally introduced with the hydrogen sulfide. The very high recovery of sulfur after only two Claus reaction steps is due to the increased concentration of sulfur compounds (hydrogen sulfide and sulfur dioxide) in the reaction stream.

In comparison with a conventional procedure employing air as the oxidant wherein the feed to the burner comprises 28.7 mole percent acid gas and 71.3 mole percent air, the process of this invention as exemplified in this Example I enables a sulfur productivity increase of 42 percent without any increase in the total input to the burner. Furthermore, while the pressure drop in the thermal reactor and the first sulfur condenser remains the same as that for the conventional air practice, the pressure drop decreases by about 55 percent in the catalytic stage. This decrease in the pressure drop permits a further substantial increase in the throughput rate at the existing supply pressure of the acid gas.

EXAMPLE II

The procedure of Example I is repeated except that two downstream catalytic stages are employed and the water condenser is operated at a lower temperature and the dew point of the gas leaving the water condenser is reduced to 90°C. This has the effect of removing twice as much water from the reaction stream as is removed in Example I. That is, all the water provided to the combustion zone is removed (as Example I) and a like amount of process water formed by the Claus reaction is also removed. The removal of more water from the reaction stream markedly increases the reactant concentrations in the downstream catalytic reactors and results in an overall sulfur recovery in excess of 99 percent of the sulfur originally introduced with the hydrogen sulfide. Furthermore the pressure drop decreases by 83 percent per catalytic stage over that for conventional air practice at an unchanged pressure drop in the thermal stage. This large reduction in pressure drop per catalytic stage permits an increased input to the burner i.e. a higher than 60 percent production boost at the existing supply pressure of the acid gas.

Now by the use of the process of this invention, one can employ a high degree of oxygen enrichment of the air for increasing the production of a Claus plant without causing damage to combustion zone refractories and without the necessity of increasing the supply pressure of the acid gas. Furthermore, the process of this invention enables more efficient Claus plant operation by enabling a greater concentration of reactants in the reaction zones.

Although the process of this invention has been described in detail with reference to certain specific embodiments, those skilled in the art will recognized that there are other embodiments of the invention within the spirit and scope of the claims.

**Claims**

1. A process for recovering sulfur comprising:

(A) providing acid gas containing hydrogen sulfide, oxidant, and water to a combustion zone to form a reaction stream;

(B) combusting hydrogen sulfide with oxidant in the presence of water to provide sulfur dioxide to the reaction stream;

(C) reacting sulfur dioxide with hydrogen sulfide to produce sulfur;

(D) recovering sulfur from the reaction stream;

(E) removing water from the reaction stream by condensation; and

(F) passing the partially dehumidified reaction stream to at least one catalytic reaction zone for further production of sulfur.

2. The process of claim 1 wherein the acid gas contains at least 50 percent hydrogen sulfide.

3. The process of claim 1 wherein the oxidant is pure oxygen.

4. The process of claim 1 wherein the oxidant is oxygen-enriched air.

5. The process of claim 4 wherein the oxygen concentration in the oxidant is at least 23 percent.

6. The process of claim 1 wherein the water is provided in liquid form.

7. The process of claim 1 wherein the acid gas, oxidant and water are passed individually to the combustion zone.

8. The process of claim 1 wherein the temperature within the combustion zone does not exceed 1500°C.

9. The process of claim 1 wherein the water is condensed by indirect cooling wherein a heat sink is physically separated from the reaction stream.

10. The process of claim 1 wherein the water condensation is effected by passing the water-containing reaction stream through an indirectly cooled, stirred water bath.

11. The process of claim 1 wherein at least some of the condensed water removed from the reaction stream is passed to the combustion zone.

12. The process of claim 1 wherein the amount of water removed from the reaction stream equals the amount of water provided to the combustion zone.

13. The process of claim 1 wherein the amount of water removed from the reaction stream exceeds the amount of water provided to the combustion zone.

14. The process of claim 1 wherein the water is provided to the combustion zone in a proportion of from about 0.40 to 0.45 mole of water per mole of nitrogen eliminated by the increase in the oxygen concentration of the oxidant over the highest oxygen concentration which cannot be exceeded without endangering the refractories by excessive temperatures.

0 280 331